# EUROPÄISCHE PATENTSCHRIFT

(11) **EP 3 078 249 B1**
(45) Veröffentlichungstag und Bekanntmachung des Hinweises auf die Patenterteilung: **02.05.2018**
(21) Anmeldenummer: 16401021.7
(22) Anmeldetag: 24.03.2016
(51) Int. Cl.: A01B 76/00, A01C 7/00, A01C 17/00

(54) **VERTEILMASCHINE, INSBESONDERE FÜR DIE LANDWIRTSCHAFT**
DISTRIBUTION MACHINE, ESPECIALLY FOR AGRICULTURAL PURPOSES
MACHINE D'ÉPANDAGE, EN PARTICULIER POUR L'AGRICULTURE

(30) Priorität: 01.04.2015 DE 102015105032
(43) Veröffentlichungstag der Anmeldung: 12.10.2016
(73) Patentinhaber: Amazonen-Werke H. Dreyer GmbH & Co. KG, 49205 Hasbergen (DE)
(72) Erfinder: Wien, Thomas, 28816 Stuhr (DE)

(56) Entgegenhaltungen:
- EP-B1- 1 961 300
- DE-A1-102013 101 448
- DE-U1-202009 018 279
- US-A1- 2013 256 433
- US-A1- 2014 048 611
- US-A1- 2014 048 612

## Beschreibung

Die Erfindung betrifft eine Verteilmaschine, insbesondere für die Landwirtschaft gemäß des Oberbegriffes des Patentanspruches 1.

Eine derartige Verteilmaschine, insbesondere für die Landwirtschaft ist in der Praxis bekannt. Bei dieser Verteilmaschine wird die gesamte Maschine mittels lichtstarker Leuchtmittel, wie Halogenscheinwerfer angestrahlt. Diese Scheinwerfer können an der Maschine selbst oder an der die Maschine ziehenden Zugmaschine, wie einem Traktor angeordnet sein. Durch das Ausleuchten der gesamten Maschine können zwar alle Teile der Maschine erkannt werden, aber die Bauteile der Maschine, die genau zu beobachten sind, sind dann jedoch nicht besonders gut zu erkennen, weil die angestrahlten Maschinenteile teilweise das Licht sehr stark reflektieren. Außerdem ist es unwirtschaftlich mit lichtstarken Leuchtmitteln die gesamte Maschine auszuleuchten und/oder anzuleuchten.

Durch die EP 1 961 300 B1, DE 20 2009 004 872 U1 und DE 20 2011 003 270 U1 ist es bekannt, die Sprühfächer, die von Sprühdüsen bei einer Feldspritze erzeugt werden, an zu leuchten und/oder zu beleuchten, Es werden hier jedoch keine Maschinenteile der Verteilmaschine ange- und/oder beleuchtet.

In der DE 10 2013 101 448 A1 wird das Beleuchten von Bauteilen von Verteilmaschinen gezeigt. Hierbei kann durch die Ausleuchtung des Lichtkegels mittels optischer Kontrolle die Arbeitsweise der Maschine überprüft werden. Wegen der immer größer werdenden Maschinen ist allerdings aus der Position der Bedienperson, beispielsweise von der Fahrerkabine aus, oder aus einer Position hinter der Maschine in vergleichsweise großer Entfernung der Verteil- oder Dosierorgane keine eindeutige Aussage über die Funktionstüchtigkeit der Maschine treffbar. Dies gilt insbesondere für Maschinen, die keine optische Kontrolle des Dosier- oder Verteilprozesses ermöglichen, beispielsweise Einzelkornsämaschinen.

Der Erfindung liegt die Aufgabe zu Grunde, mit einfachen Mitteln eine verbesserte optische Kontrollmöglichkeit von Bauteilen einer Verteilmaschine zu schaffen.

Diese Aufgabe wird erfindungsgemäß dadurch gelöst, dass die Beleuchtungscharakteristik des zumindest einen Leuchtmittels zumindest annähernd gleichzeitig mit einem Ein- und/oder Ausschaltvorgang des Verteilprozesses geändert wird. Dies umfasst die Änderung der Farbe des abgestrahlten Lichts und kann zusätzlich wahlweise die Änderung einer Blinkfrequenz des Leuchtmittels umfassen.

Infolge dieser Maßnahme kann die korrekte Arbeit durch eine einfache Sichtkontrolle vom Bediener der Maschine auch aus großer Entfernung und bei Dunkelheit überprüft werden, weil durch die Beleuchtung an den zu überwachenden Bauteilen eine vereinfachte Sichtkontrolle des Betriebsstatus des Bauteils möglich ist. So wird für einen Betrachter, beispielsweise das Bedienpersonal der Verteilmaschine, eine direkte Rückmeldung gegeben, dass der Verteilprozess wie gewünscht in Gang gesetzt wurde.

Eine gute Sichtbarkeit der zu überwachenden Teile, hier das Dosierorgan und dessen Stellelemente wird auch bei Dunkelheit dadurch in einfacher Weise ermöglicht, dass die von dem zumindest einen Leuchtmittel abstrahlenden Lichtstrahlen das Dosierorgan und dessen Umgebung ausleuchtet.

Um auch bei Dunkelheit eine genaue Einstellung des Dosierorgans ohne zusätzliche Hilfsmittel vornehmen zu können, ist vorgesehen, dass die von dem zumindest einen Leuchtmittel abstrahlenden Lichtstrahlen das Einstellmittel des zumindest einen Ausbringorgans und dessen Umgebung ausleuchtet.

Besonders vorteilhaft findet die vorliegende Erfindung bei Sämaschinen Verwendung, da das zu verteilende Gut während des Verteilprozesses von außen nicht sichtbar ist, so dass keine direkte optische Kontrolle des Verteilvorganges möglich ist. Die erfindungsgemäße Beleuchtung ermöglicht nun eine direkte Rückmeldung, welches der vorhandenen Dosier- und/oder Ausbringorgane jeweils am Verteilprozess teilnimmt.

In einer weiteren Ausgestaltung findet das erfindungsgemäße Leuchtmittel Verwendung, um den Verteilprozess von Einzelkornsäaggregaten anzuzeigen.

In einer besonders vorteilhaften Ausgestaltung wird der Betrieb des erfindungsgemäßen Leuchtmittels mit einer Sensorvorrichtung gekoppelt, um vorzugsweise durch Ausschalten des jeweiligen Leuchtmittels zu indizieren, dass das entsprechende Dosier- und/oder Ausbringorgan blockiert und/oder der Partikelstrom abgerissen ist.

In einer Ausgestaltung der Erfindung wird das zumindest eine Leuchtmittel derart angebracht, dass das zumindest eine Leuchtmittel von der Fahrerkabine des die Verteilmaschine ziehenden oder tragenden Fahrzeuges oder von einer beliebigen Position in Fahrtrichtung hinter der Maschine aus sichtbar ist.

Bei einer Verteilmaschine, bei der unterhalb des zumindest einen Dosierorgans zumindest eine die von dem zumindest einem Dosierorgan dosierten Materialien in Breitverteilung abschleudernde und rotierend angetriebene und mit Wurfschaufeln besetzte Schleuderscheibe angeordnet ist, ist vorgesehen, dass die von dem zumindest einen Leuchtmittel abstrahlenden Lichtstrahlen die zumindest eine mit Wurfschaufeln besetzte Schleuderscheibe an- und/oder beleuchten. Hierdurch lässt sich auch bei Dunkelheit die korrekte Zuführung des Materials von dem Dosierorgan zu den Wurfschaufeln und der Schleuderscheibe durch Sichtkontrolle überwachen.

Um auch bei Dunkelheit erkennen zu können, ob die auszubringende Materialien in korrekter Weise in die Wurfschaufeln eingeleitet und von diesen entsprechenden korrekt abgeworfen werden, ist vorgesehen, dass die von dem zumindest einen Leuchtmittel abstrahlenden Lichtstrahlen die von den Wurfschaufeln in einem Streufächer abgeschleuderten Materialpartikel zumindest teilweise an- und/oder beleuchten.

Um sicherzustellen, dass die Leuchtmittel automatisch zum richtigen Zeitpunkt eingeschaltet, und wenn sie nicht mehr benötigt werden, ausgeschaltet werden, ist vorgesehen, dass zumindest ein Helligkeitssensor vorgesehen ist, welcher das zumindest eine Leuchtmittel bei einem festgelegten Helligkeitswert ein- und/oder ausschaltet.

Um die auszuleuchtenden Bauteile möglichst effizient beleuchten zu können, ist vorgesehen, dass das zumindest ein Leuchtmittel eine LED-Lichtquelle ist.

Weiterhin ist es ist verständlich möglich, anstelle von LED-Lichtquellen auch Halogenlichtquellen oder andere geeignete Leuchtmittel einzusetzen.

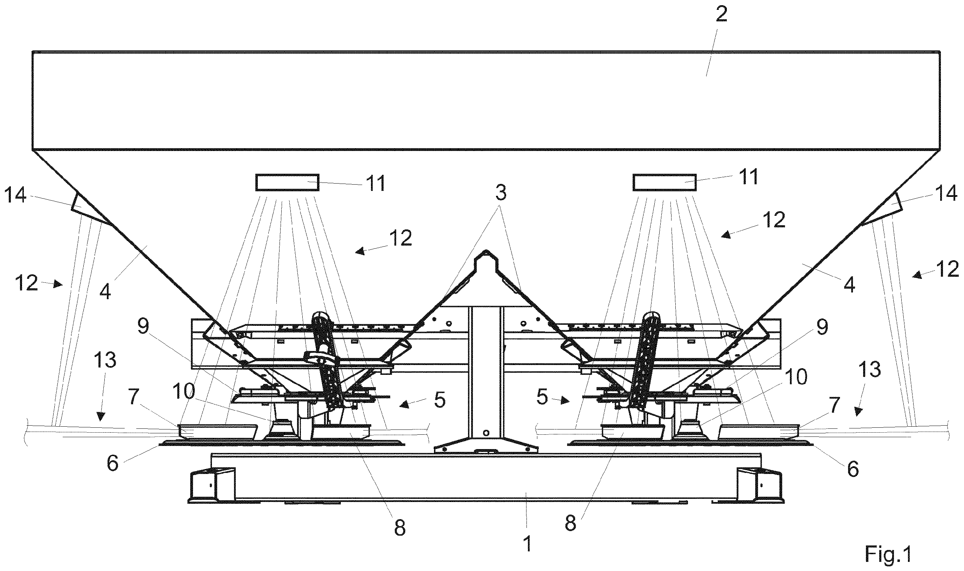

Weitere Einzelheiten der Erfindung sind der Beispielsbeschreibung und den Zeichnungen zu entnehmen. Die Zeichnungen zeigen
- Fig.1: eine als Schleuderstreuer ausgebildete Verteilmaschine in der Ansicht von hinten,
- Fig.2: eine als mit Verteilerkopf einer Sämaschine ausgebildete Verteilmaschine in Seitenansicht und Prinzipdarstellung und
- Fig. 3: eine Einzelkornsämaschine in der Ansicht von hinten.

Der Schleuderdüngerstreuer weist einen Rahmen 1 und einen Vorratsbehälter 2 auf. Auf der Vorderseite des Rahmens 1 sind in bekannter und daher nicht näher dargestellter Weise Dreipunktkupplungselemente zum Anbau an einen Schlepperkraftheber angeordnet. Der Vorratsbehälter 2 weist in seinem unteren Bereich die beiden durch das dachförmige Mittelteil 3 voneinander getrennten Auslauftrichter 4 auf. Die Auslauftrichter 4 sind jeweils durch ein Dosierorgan 5 abgeschlossen. Unterhalb der Dosierorgane 5 ist jeweils eine rotierend angetriebene Schleuderscheibe 6 angeordnet. Die Dosierorgane 5 leiten das sich im Vorratsbehälter 2 befindliche zu verteilende Material in einstellbaren Mengen den Schleuderscheiben 6 zu. Auf den Schleuderscheiben 6 sind Wurfschaufeln 7 und 8 angeordnet, welche das ihnen zugeleitete Material in Bereitverteilung auf der Bodenoberfläche verteilen. Dem Dosierorgan 5 ist jeweils ein Einstellmittel 9 zum Einstellen des Dosierorgans 5 zugeordnet. Damit kann das der Schleuderscheibe 6 zu dosierte Material, welches sich im Vorratsbehälter 2 befindet, in der jeweiligen Menge entsprechend eingestellt werden.

Jede Schleuderscheibe 6 ist über eine an einer nicht dargestellten Lagerwelle befestigte Nabe 10 angeordnet. Die Lagerwelle ist mittels einer nicht dargestellten Lageranordnung am Rahmen 1 drehbar gelagert und wird über einen bekannten und daher nicht dargestellten motorischen Antrieb rotierend angetrieben.

An der Verteilmaschine sind zumindest Teile der Verteilmaschine an- oder beleuchtende Leuchtmittel 11 zugeordnet. Diese Leuchtmittel 11 können als zumindest eine LED-Lichtquelle ausgebildet sein. Es ist auch möglich, anstelle dieser Leuchtmittel 11 anders ausgestaltete Leuchtmittel, beispielsweise Halogenleuchten einzusetzen. Diese Leuchtmittel 11 sind derart ausgestaltet und/oder ausgerichtet, dass sie das Dosierorgan 5 und das diesem Dosierorgan 5 zugeordnete Stellelement 10 an- und/oder beleuchten.

Die von dem Leuchtmittel 11 abstrahlenden Lichtstrahlen 12 leuchten das Dosierorgan 5 und dessen Umgebung aus, sobald der Verteil- und/oder Dosierprozess gestartet wird. Weiterhin werden das Einstellmittel 9 des Stellelementes zum Einstellen des Dosierorgans 5 und dessen Umgebung ausgeleuchtet.

Weiterhin sind die Leuchtmittel so angeordnet, dass sie die Ausbringorgane, hier ausgestaltet als Schleuderscheiben 6 und die darauf angeordneten Wurfschaufeln 7 und 8, an- und/oder beleuchten, sobald der Verteil- und/oder Dosierprozess gestartet wird. Somit kann die Funktionsweise der Wurfschaufeln 7 und 8 und das Einleiten des Materials von dem Dosierorgan 5 in die Wurfschaufeln 7 und 8 auch bei Dunkelheit visuell überprüft werden.

Weiterhin strahlen in die Lichtstrahlen 12 der Leuchtmittel 11 den Streufächer 13, der von den Wurfschaufeln 7 und 8 in Breitverteilung abgeschleuderten Materialpartikel gebildet wird, an. Somit wird auch der Streufächer 13 von den Lichtstrahlen 12 der Leuchtmittel 11 ange- und/oder beleuchtet.

Weiterhin kann den Leuchtmitteln 11 ein nicht dargestellter Helligkeitssensor zugeordnet sein, welche die Leuchtmittel bei einem festgelegten Helligkeitswert ein- und/oder ausschaltet. Somit wird also bei einsetzender Dämmerung oder Dunkelheit das jeweilige Leuchtmittel 11 automatisch eingeschaltet und bei entsprechender Helligkeit wieder ausgeschaltet.

Weiterhin sind noch die Leuchtmittel 14 an der Verteilmaschine angeordnet. Die Lichtstrahlen 12 dieser Leuchtmittel 14 strahlen den Streufächer 13 bzw. die sich in dem Streufächer 13 befindlichen abgeschleuderten Materialpartikel an, so dass diese auch bei Dunkelheit sichtbar sind. Durch die seitliche Anordnung dieser Leuchtmittel, ist der Betrieb der Dosier- und/oder Ausbringorgane auch von der Fahrerkabine eines in Fahrtrichtung vor der Verteilmaschine sich befindlichen Fahrzeuges gut zu kontrollieren.

Durch das Anstrahlen der abgeschleuderten Materialpartikel des Streufächers 13 ist eine optische Kontrolle auch bei Dunkelheit möglich. Es ist so auch bei Dunkelheit zu überprüfen, ob der Streuer das auszubringende Material in richtiger Weise ausbringt. Auch kann eine optische Kontrolle bei Dunkelheit durchgeführt werden, ob das Dosierorgan 5 korrekt arbeitet bzw. verstopft ist.

Zusätzlich ist die erfindungsgemäße Installation eines hier nicht dargestellten Sensors im Bereich der Dosier- und/oder Ausbringorgane denkbar, welcher den Partikelstrom überwacht und bei Unterbrechung des Partikelstromes, beispielsweise durch ein Leerlaufen des Behälters oder eine Blockade, die Leuchtmittel ausschaltet und so ein Signal erzeugt, welches das Bedienpersonal auf eine Fehlfunktion der Verteilmaschine hinweist.

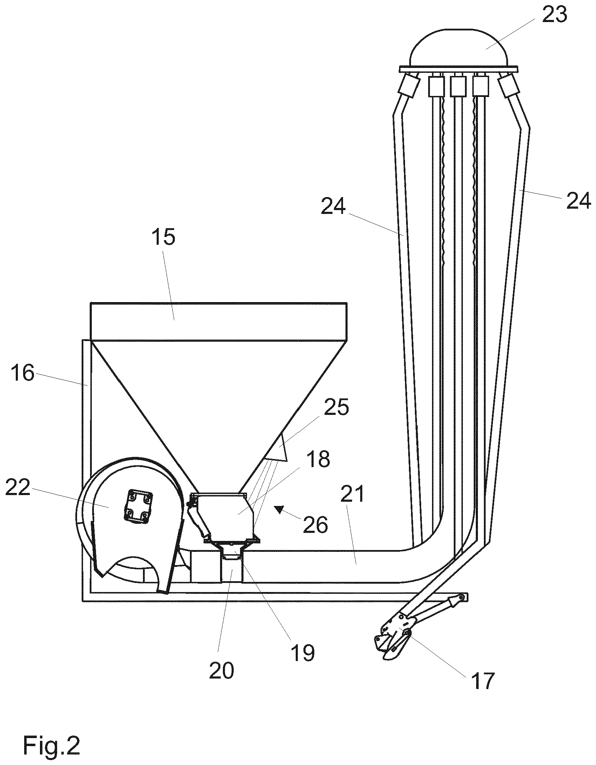

Gemäß dem Ausführungsbeispiel nach Fig. 2 ist die Verteilmaschine als pneumatische Verteilmaschine ausgebildet. Diese pneumatische Verteilmaschine weist den Vorratsbehälter 15, den Rahmen 16 und die an dem Rahmen 16 angelenkten Säschare 17 auf. Das sich im Vorratsbehälter 15 befindliche Material wird über die Dosiervorrichtung 18 über die Schleuse 19 des Injektor 20 in die Förderleitung 21, die an eine Gebläse 22 angeschlossen ist, eingespeist. Über die Förderleitung 21 gelangt das dosierte Material zu dem als Prallkopf 23 ausgebildete Verteiler, von dem aus das Saatgut auf die einzelnen Auslässe, denen die zu den Säscharen 17 führenden Leitungen 24 angeschlossen sind, aufgeteilt wird. Wie bereits erwähnt, wird über den Injektor 20 das auszubringende Material von der Dosiereinrichtung 18 in die Förderleitung 21 eingespeist.

An der Verteilmaschine sind zumindest Teile der Verteilmaschine an- oder beleuchtende Leuchtmittel 25 zugeordnet. Diese Leuchtmittel 25 können als zumindest eine LED-Lichtquelle ausgebildet sein. Es ist auch möglich, anstelle dieser Leuchtmittel anders ausgestaltete Leuchtmittel, beispielsweise Halogenleuchten einzusetzen. Diese Leuchtmittel 25 sind derart ausgestaltet und/oder ausgerichtet, dass sie das Dosierorgan 18 und das diesem Dosierorgan 18 zugeordnete, jedoch nicht dargestellte Stellelement an- und/oder beleuchten, sobald der Verteil- und/oder Dosierprozess gestartet wird.

Die von dem Leuchtmittel 25 abstrahlenden Lichtstrahlen 26 leuchten das Dosierorgan 18 und dessen Umgebung aus. Weiterhin wird das Einstellmittel des Stellelementes zum Einstellen des Dosierorgans 18 und dessen Umgebung ausgeleuchtet.

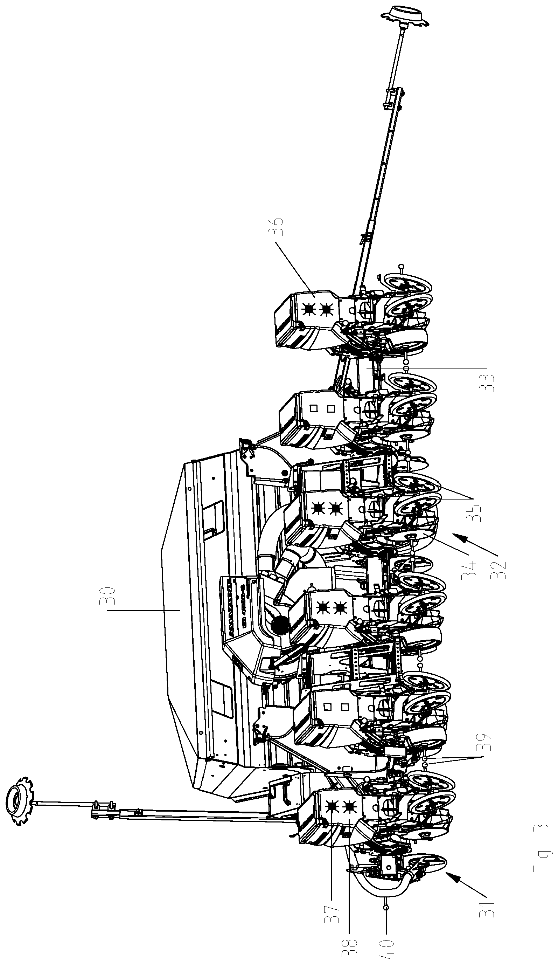

Fig. 3 zeigt eine pneumatische Einzelkornsämaschine. Im vorderen Bereich ist ein Düngertank (30) angeordnet. Ähnlich der in Fig. 2 gezeigten Vorrichtung wird der Dünger pneumatisch über Schläuche zu den einzelnen Ablage- bzw. Ausbringorganen geführt (32).

Die Ausbringorgane (32) sind an einer quer zur Fahrtrichtung verlaufenden Rahmenkonstruktion (33) befestigt und vereinen in bekannter und nicht näher dargestellter Weise im vorderen Bereich die Verteilung des Düngers und im hinteren Bereich die Verteilung des Saatgutes. Hierfür wird in Fahrtrichtung vorne jeweils mittels eines Düngerschares (31) der Dünger in den Boden abgelegt. Dahinter wird mittels einer weiteren Scharvorrichtung eine Furche für das Saatgut geformt, in welche anschließend das Saatgut abgelegt wird. Die Ablagetiefe wird durch die zwei Tragrollen (34) bestimmt, welche Teil des Ausbringorgans (32) sind. Jeweils zwei Rollen (35) zum Schließen der Saatfurche befinden sich im hinteren Teil des Ausbringorgans (32).

Das Saatgut wird individuell für jedes Ausbringorgan in Tanks (36) im hinteren Bereich der Maschine aufbewahrt und gelangt von dort jeweils über nicht näher dargestellte Vereinzelungsvorrichtungen zu den Säscharen.

Den Ausbringorganen sind jeweils zwei Leuchtmittel (37, 38) zugeordnet, wobei in dem vorliegenden Ausführungsbeispiel ein Erstes (37) den Betrieb des Düngeschares (31) bzw. die Verteilung des Düngers an dem jeweiligen Schar anzeigt und ein Zweites (38) den Betrieb der jeweiligen dem jeweiligen Ausbringorgan zugeordneten Vereinzelungsvorrichtung bzw. die Verteilung des Saatgutes anzeigt. Hierfür sind die Leuchtmittel in nicht dargestellter Weise mit einer Steuervorrichtung, beispielsweise einem Jobrechner der Verteilmaschine, verbunden.

Die Leuchtmittel (37, 38) sind in dem vorliegenden Beispiel übereinander an den Tanks (36) angeordnet. Sie können ebenso nebeneinander oder an einer anderen Position, beispielsweise am Rahmen oder für Maschinen, die einen zentralen Saatguttank aufweisen, an ebendiesem angebracht werden. Auch ist denkbar, für (37) und (38) Leuchtmittel unterschiedlicher Farbe zu verwenden, um eine bessere Übersichtlichkeit zu wahren.

Im vorliegenden Fall sind beispielsweise zweiAusbringorgane der Maschine außer Betrieb, um während des Saatvorganges für die spätere Bearbeitung der Fläche mittels Düngerstreuer oder Pflanzenschutzspritze ein Fahrgassensystem nach einem vorbestimmten Muster anzulegen. Dieses lässt sich an den ausgeschalteten Leuchtmitteln erkennen. Somit kann mit der vorliegenden Erfindung bei der Betrachtung der Maschine während des Betriebs von hinten in vorteilhafter Weise erkannt und überwacht werden, welche Ausbringorgane zu dem jeweiligen Zeitpunkt in Betrieb sind.

In der dargestellten Ausgestaltung sind zudem Sensoren (39, 40) zur Überwachung des Saatgutstromes im Bereich der Vereinzelungsvorrichtungen an den Ausbringorganen (39) sowie für die Überwachung des Düngestromes im Bereich der Düngeschläuche (40) angebracht. Diese Sensoren, welche beispielsweise als mechanische, optische oder kapazitive Sensoren ausgestaltet sein können, überwachen den jeweiligen Partikelstrom und sind mit den jeweiligen Leuchtmitteln mittels der nicht dargestellten Steuervorrichtung verbunden. Auf diese Weise können die Leuchtmittel automatisch außer Betrieb genommen werden, sobald der Partikelstrom abreißt. Auch ist denkbar, dass verschiedene Leuchtmittel jeweils den Betrieb des Ausbringorganes und den Messzustand der Sensoren anzeigen. Somit kann vorteilhaft unterschieden werden, ob ein Ausbringorgan absichtlich außer Betrieb genommen wurde oder ob ein Fehler, hervorgerufen beispielsweise durch einen leergelaufenen Tank oder eine Blockade, vorliegt.

## Patentansprüche

1. Verteilmaschine, insbesondere für die Landwirtschaft, mit zumindest einem Vorratsbehälter (2, 15, 30) zur Aufnahme von zu verteilendem, körnigem Material, der in seinem unteren Bereich zumindest ein Dosierorgan (5,18) und/oder zumindest ein Ausbringorgan (32) zur Verteilung des körnigen Materials aufweist, wobei der Verteilmaschine zumindest ein zumindest Teile der Verteilmaschine an- und/oder beleuchtendes Leuchtmittel (11, 25, 37, 38) zugeordnet ist, wobei das zumindest eine Leuchtmittel derart ausgestaltet und/oder ausgerichtet ist, dass das zumindest eine Leuchtmittel das zumindest eine Dosierorgan (5,18) und/oder das zumindest eine Ausbringorgan (32) an- und/oder beleuchtet, **dadurch gekennzeichnet, dass** die Beleuchtungscharakteristik des zumindest einen Leuchtmittels (11, 25, 37, 38) zumindest annähernd gleichzeitig mit einem Ein- und/oder Ausschaltvorgang des Verteilprozesses geändert wird, wobei die Farbe des abgestrahlten Lichts des zumindest einen Leuchtmittels (11, 25, 37, 38) gleichzeitig mit dem An- und Abschalten des Verteilprozesses geändert wird.

2. Verteilmaschine nach Anspruch 1, **dadurch gekennzeichnet, dass** die Frequenz eines Blinkprozesses des zumindest einen Leuchtmittels (11, 25, 37, 38) gleichzeitig mit dem An- und Abschalten des Verteilprozesses geändert wird.

3. Verteilmaschine nach zumindest einem der vorstehenden Ansprüche, **dadurch gekennzeichnet, dass** die von dem zumindest einen Leuchtmittel (11, 25, 37, 38) abstrahlenden Lichtstrahlen das Dosierorgan (5,18) und dessen Umgebung ausleuchten.

4. Verteilmaschine nach zumindest einem der vorstehenden Ansprüche, **dadurch gekennzeichnet, dass** die von dem zumindest einen Leuchtmittel abstrahlenden Lichtstrahlen das Ausbringorgan (32) und dessen Umgebung ausleuchten.

5. Verteilmaschine nach zumindest einem der vorstehenden Ansprüche, **dadurch gekennzeichnet, dass** das Ausbringorgan (32) als Säschar ausgebildet ist und jedem Ausbringorgan (32) ein Dosierorgan zugeordnet ist.

6. Verteilmaschine nach Anspruch 5, **dadurch gekennzeichnet, dass** das Dosierorgan zur Vereinzelung von Saatgut geeignet ist.

7. Verteilmaschine nach zumindest einem der vorstehenden Ansprüche, **dadurch gekennzeichnet, dass** dem Ausbringorgan (32) und/oder dem Dosierorgan (5,18) und/oder der Verbindung zwischen Dosierorgan und Ausbringorgan, welche vorzugsweise als Rohr- und/oder Schlauchverbindung ausgestaltet sein kann, eine Sensorvorrichtung (39, 40) zur Detektion des Partikelstroms, insbesondere Saatgutstromes, und/oder etwaiger Blockaden zugeordnet ist, wobei die Beleuchtungscharakteristik des zumindest einen Leuchtmittels (11, 25, 37, 38) geändert wird, sobald mittels der Sensorvorrichtung (39, 40) eine Blockade und/oder ein aussetzender Partikelstrom detektiert wird.

8. Verteilmaschine nach zumindest einem der vorstehenden Ansprüche, **dadurch gekennzeichnet, dass** das zumindest eine Leuchtmittel (11, 25, 37, 38) von einer Position in Fahrtrichtung vor der Maschine aus, welche vorzugsweise ungefähr der Position der Fahrerkabine einer die Verteilmaschine ziehenden oder tragenden Zugmaschine entspricht, sichtbar ist.

9. Verteilmaschine nach zumindest einem der vorstehenden Ansprüche, **dadurch gekennzeichnet, dass** alle an der Verteilmaschine angebrachten Leuchtmittel (11, 25, 37, 38) von einer beliebigen Position in Fahrtrichtung hinter der Maschine aus sichtbar sind.

10. Verteilmaschine nach zumindest einem der Ansprüche 1-4, wobei unterhalb des zumindest einen Dosierorgans zumindest eine die von dem zumindest einen Dosierorgan (5,18) dosierten Materialien in Breitverteilung abschleudernde und rotierend angetriebene und mit Wurfschaufeln (7, 8) besetzte Schleuderscheibe (6) als Ausbringorgan angeordnet ist, **dadurch gekennzeichnet, dass** die von dem zumindest einen Leuchtmittel (11, 25, 37, 38) abstrahlenden Lichtstrahlen die zumindest eine mit Wurfschaufeln (7, 8) besetzte Schleuderscheibe (6) an- und/oder beleuchten.

11. Verteilmaschine nach Anspruch 10, **dadurch gekennzeichnet, dass** die von dem zumindest einem Leuchtmittel (11, 25, 37, 38) abstrahlenden Lichtstrahlen die von den Wurfschaufeln (7, 8) in einem Streufächer abgeschleuderten Materialpartikel zumindest teilweise an- und/oder beleuchten.

12. Verteilmaschine nach zumindest einem der vorstehenden Ansprüche, **dadurch gekennzeichnet, dass** zumindest ein Helligkeitssensor vorgesehen ist, welcher das zumindest eine Leuchtmittel (11, 25, 37, 38) bei einem festgelegten Helligkeitswert ein- und/oder ausschaltet.

13. Verteilmaschine nach zumindest einem der vorstehenden Ansprüche, **dadurch gekennzeichnet, dass** das zumindest eine Leuchtmittel (11, 25, 37, 38) eine LED-Lichtquelle ist.

## Claims

1. Distribution machine, in particular for agriculture, having at least one storage container (2, 15, 30) for holding granular material which is to be distributed, said storage container (2, 15, 30) having, in its lower region, at least one metering element (5, 18) and/or at least one spreading element (32) for distributing the granular material, wherein the distribution machine is assigned at least one lighting means (11, 25, 37, 38) which illuminates at least parts of the distribution machine, wherein the at least one lighting means is configured and/or oriented in such a way that the at least one lighting means illuminates the at least one metering element (5, 18) and/or the at least one spreading element (32), **characterized in that** the illumination characteristic of the at least one lighting means (11, 25, 37, 38) is changed at least approximately at the same time as a switch-on and/or switch-off operation of the distribution process, wherein the colour of the irradiated light of the at least one lighting means (11, 25, 37, 38) is changed simultaneously with the switching on and off of the distribution process.

2. Distribution machine according to Claim 1, **characterized in that** the frequency of a flashing light process of the at least one lighting means (11, 25, 37, 38) is changed simultaneously with the switching on and off of the distribution process.

3. Distribution machine according to at least one of the preceding claims, **characterized in that** the light beams which radiate from the at least one lighting means (11, 25, 37, 38) fully illuminate the metering element (5, 18) and its surroundings.

4. Distribution machine according to at least one of the preceding claims, **characterized in that** the light beams which radiate from the at least one lighting means fully illuminate the spreading element (32) and its surroundings.

5. Distribution machine according to at least one of the preceding claims, **characterized in that** the spreading element (32) is embodied as a seed drill coulter, and each spreading element (32) is assigned a metering element.

6. Distribution machine according to Claim 5, **characterized in that** the metering element is suitable for singulating seed.

7. Distribution machine according to at least one of the preceding claims, **characterized in that** a sensor device (39, 40) for detecting the stream of particles, in particular stream of seed, and/or any blockages, is assigned to the spreading element (32) and/or the metering element (5, 18) and/or the connection between the metering element and spreading element, said connection preferably being able to be configured as a tubular connection and/or hose connection, wherein the illumination characteristic of the at least one lighting means (11, 25, 37, 38) is changed as soon as a blockage and/or a stream of particles which is to be interrupted is detected by means of the sensor device (39, 40).

8. Distribution machine according to at least one of the preceding claims, **characterized in that** the at least one lighting means (11, 25, 37, 38) is visible from a position in front of the machine in the direction of travel, which position preferably corresponds approximately to the position of the driver's cab of a tractor machine which is pulling or carrying the distribution machine.

9. Distribution machine according to at least one of the preceding claims, **characterized in that** all of the lighting means (11, 25, 37, 38) which are mounted on the distribution machine are visible from any desired position behind the machine in the direction of travel.

10. Distribution machine according to at least one of Claims 1-4, wherein at least one centrifugal disc (6) which throws out in a width distribution the materials metered by the at least one metering element (5, 18) is arranged as a spreading element underneath the at least one metering element, said centrifugal disc (6) being driven in rotation and fitted with throwing blades (7, 8), **characterized in that** the light beams which radiate from the at least one lighting means (11, 25, 37, 38) illuminate the at least one centrifugal disc (6) which is fitted with throwing blades (7, 8).

11. Distribution machine according to Claim 10, **characterized in that** the light beams which radiate from the at least one lighting means (11, 25, 37, 38) at least partially illuminate the particles of material which are thrown out in a spreading fan by the throwing blades (7, 8).

12. Distribution machine according to at least one of the preceding claims, **characterized in that** at least one brightness sensor is provided which switches the at least one lighting means (11, 25, 37, 38) on and/or off at a defined brightness value.

13. Distribution machine according to at least one of the preceding claims, **characterized in that** the at least one lighting means (11, 25, 37, 38) is an LED light source.

## Revendications

1. Machine de distribution, notamment pour l'agriculture, comprenant au moins un réservoir (2, 15, 30) destiné à recevoir une matière granulaire à distribuer, lequel possède dans sa zone inférieure au moins un organe de dosage (5, 18) et/ou au moins un organe d'épandage (32) destiné à la distribution de a matière granulaire, au moins un moyen lumineux (11, 25, 37, 38) qui illumine et/ou éclaire au moins des parties de la machine de distribution étant associé à la machine de distribution, l'au moins un moyen lumineux étant configuré et/ou orienté de telle sorte que l'au moins un moyen lumineux illumine et/ou éclaire l'au moins un organe de dosage (5, 18) et/ou l'au moins un organe d'épandage (32), **caractérisée en ce que** la caractéristique d'éclairage de l'au moins un moyen lumineux (11, 25, 37, 38) est modifiée au moins approximativement simultanément avec une opération de mise en marche et/ou à l'arrêt du processus de distribution, la couleur de la lumière émise de l'au moins un moyen lumineux (11, 25, 37, 38) étant modifiée simultanément avec l'embrayage et/ou le débrayage du processus de distribution.

2. Machine de distribution selon la revendication 1, **caractérisée en ce que** la fréquence d'un processus de clignotement de l'au moins un moyen lumineux (11, 25, 37, 38) est modifiée simultanément avec l'embrayage et/ou le débrayage du processus de distribution.

3. Machine de distribution selon au moins l'une des revendications précédentes, **caractérisée en ce que** les rayons de lumière émis par l'au moins un moyen lumineux (11, 25, 37, 38) illuminent l'organe de dosage (5, 18) et son environnement.

4. Machine de distribution selon au moins l'une des revendications précédentes, **caractérisée en ce que** les rayons de lumière émis par l'au moins un moyen lumineux illuminent l'organe d'épandage (32) et son environnement.

5. Machine de distribution selon au moins l'une des revendications précédentes, **caractérisée en ce que** l'organe d'épandage (32) est réalisé sous la forme d'un soc de semoir et un organe de dosage est associé à chaque organe d'épandage (32).

6. Machine de distribution selon la revendication 5, **caractérisée en ce que** l'organe de dosage est adapté à la séparation de semence.

7. Machine de distribution selon au moins l'une des revendications précédentes, **caractérisée en ce qu'**à l'organe d'épandage (32) et/ou à l'organe de dosage (5, 18) et/ou à la liaison entre l'organe d'épandage et l'organe de dosage, laquelle peut être configurée de préférence sous la forme d'une liaison par tube et/ou tuyau, est associé un dispositif de détection (39, 40) destiné à détecter le flux de particules, notamment le flux de semence, et/ou d'éventuelles obstructions, la caractéristique d'éclairage de l'au moins un moyen lumineux (11, 25, 37, 38) étant modifiée dès qu'une obstruction et/ou un flux de particules intermittent est détecté au moyen du dispositif de détection (39, 40) .

8. Machine de distribution selon au moins l'une des revendications précédentes, **caractérisée en ce que** l'au moins un moyen lumineux (11, 25, 37, 38) est visible depuis une position dans le sens de la marche de la machine, laquelle correspond de préférence approximativement à la position de la cabine du conducteur d'un tracteur qui remorque ou porte la machine de distribution.

9. Machine de distribution selon au moins l'une des revendications précédentes, **caractérisée en ce que** tous les moyens lumineux (11, 25, 37, 38) installés sur la machine de distribution sont visibles depuis une position quelconque dans le sens de la marche derrière la machine.

10. Machine de distribution selon au moins l'une des revendications 1 à 4, au moins un disque centrifuge (6) faisant office d'organe d'épandage étant disposé sous l'au moins un organe de dosage, lequel éjecte par centrifugation les matières dosées par l'au moins un organe de dosage (5, 18) en les distribuant en largeur, est entraîné en rotation et est garni de pales d'éjection (7, 8), **caractérisée en ce que** les rayons de lumière émis par l'au moins un moyen lumineux (11, 25, 37, 38) illuminent et/ou éclairent l'au moins un disque centrifuge (6) garni de pales d'éjection (7, 8).

11. Machine de distribution selon la revendication 10, **caractérisée en ce que** les rayons de lumière émis par l'au moins un moyen lumineux (11, 25, 37, 38) illuminent et/ou éclairent au moins partiellement les particules de matière éjectées par centrifugation par les pales d'éjection (7, 8) en un éventail d'épandage.

12. Machine de distribution selon au moins l'une des revendications précédentes, **caractérisée en ce qu'**au moins un capteur de luminosité est présent, lequel allume et/ou éteint l'au moins un moyen lumineux (11, 25, 37, 38) à une valeur de luminosité définie.

13. Machine de distribution selon au moins l'une des revendications précédentes, **caractérisée en ce que** l'au moins un moyen lumineux (11, 25, 37, 38) est une source de lumière à LED.
